# EUROPEAN PATENT SPECIFICATION

(11) **EP 1 722 134 B1**
(45) Date of publication and mention of the grant of the patent: **15.10.2008**
(21) Application number: 06007513.2
(22) Date of filing: 10.04.2006
(51) Int. Cl.: F16H 61/12, F02D 41/02

(54) **Control apparatus for automatic transmission**
Steuervorrichtung für Automatikgetriebe
Système de commande pour une transmission automatique

(30) Priority: 25.04.2005 JP 2005126460
(43) Date of publication of application: 15.11.2006
(73) Proprietor: JATCO Ltd, Fuji-shi, Shizuoka 417-8585 (JP)
(72) Inventor: Tanaka, Hiroyasu, Fuji-shi Shizuoka 417-8585 (JP); Inoue, Takuichiro, Fuji-shi Shizuoka 417-8585 (JP); Oohori, Takeshi, Fuji-shi Shizuoka 417-8585 (JP)
(74) Representative: Grünecker, Kinkeldey, Stockmair & Schwanhäusser Anwaltssozietät

(56) References cited:
- US-A- 5 460 581
- US-A- 5 655 408
- US-A1- 2004 220 016

## Description

### BACKGROUND OF THE INVENTION

The present invention relates to an automatic transmission of a vehicle, and more particularly to apparatus for controlling the automatic transmission in accordance with the driving situation of the vehicle.

An automatic transmission of a vehicle is generally provided with an inhibitor switch as a sensor detecting a shift range or an operating position (or a gear selector position) set by a selector lever. A driver operates selector lever and selects the shift ranges, such as N (neutral), D (drive) and R (reverse). Needless to say, N position indicates that a state where an engine torque from an engine is fully cut (there is no transfer of torque), D position indicates a normal driving, and R position indicates that a control to drive the vehicle backward is initiated. The inhibitor switch detects an electrical signal (INH signal) corresponding to the shift range and is electrically capable of recognizing the selected shift range. And then, a gear position of the automatic transmission is set on the basis of the detected INH signal corresponding to the shift range, and proper control of the transmission for the shift range can be initiated.

Prior art US 5,460,581 discloses a control apparatus for an automatic transmission with an operating lever, an inhibitor switch, an engine control unit wherein the output torque is suppressed or reduced when an inhibitor switch signal does not correspond to the plurality of the predetermined shift ranges.

In a typical automatic transmission, the selector lever is provided such that the selector lever is rotatable about fulcrum and sets the shift range. When the selector lever is rotated and positioned at a predetermined shift range, an electrical circuit is formed such that the inhibitor switch detects the shift range and outputs the INH signal corresponding to the shift range. In this way, shift range set by the selector lever is recognized or distinguished.

Additionally, a control valve is provided in a hydraulic circuit for engaging or disengaging a clutch device. The selector lever is connected to the control valve for directly operating the clutch device. The selector lever is therefore capable of performing connect/disconnect control of a driving force which is transferred to the automatic transmission. That is, the control valve is actuated (opened or closed) according to a position set by the selector lever. For example, when the driver operates the selector lever and its lever position is at N position, an oil pressure is regulated so that the clutch is released (disengaged), while when the lever position is at D position, the oil pressure is regulated so that the clutch is engaged.

In the above automatic transmission, by way of one operation of the selector lever, the following two controls are made at the same time, (1) a control for the transmission based on the output INH signal corresponding to the shift range, (2) a control for the clutch engage/disengagement directly operated by the selector lever (the selector lever position) via the control valve. However, in the automatic transmission having these two kinds of control systems, there may arise a difference between the shift range indicated by output INH signal and the lever position operated by the driver, which results from a delay between change of the INH signal and movement of the control valve. In this case, two control systems for the transmission and for the clutch go out of synchronization with each other. Therefore, there is a possibility that engine racing and also a large shock upon engagement of the clutch will occur. And this causes deterioration in controllability and drivability.

For the above problem, Japanese Patent Provisional Publication No. 2004-263741 (hereinafter is referred to as "JP2004-263741") shows a clutch engagement control device of an automatic transmission. In JP2004-263741, the clutch engagement control device has a controller for determining whether the above delay (an unmatching range condition) occurs or not. When the delay is detected (the unmatching range condition occurs), an engine rpm and an engine torque are reduced. For instance, there may be a case where the control valve remains in N position due to the delay, whereas the inhibitor switch has output the INH signal indicating D position. In this case, if a measured engine rpm (an actual engine rpm) is high compared with an estimate value (i.e. if the engine rpm is too high), the clutch device is interpreted as being in neutral, and the controller is configured to reduce an engine's power output. That is, although the control valve changes from N position to D position with delay and the clutch engagement takes place, the engine's power output is reduced prior to the clutch engagement. By this control, even in a case of an abrupt acceleration by operating and shifting the selector lever from N position to D position after the engine rpm has increased under the neutral condition (namely that even when the so-called racing select is operated), an incoming torque is reduced and thus protecting the automatic transmission. It is therefore possible to reduce the racing of engine and the shock upon clutch engagement, and to improve the controllability of the automatic transmission.

### SUMMARY OF THE INVENTION

In the typical automatic transmission and in JP2004-263741, however, since the inhibitor switch detects and outputs the INH signal corresponding to the shift range by sliding contact with a plurality of contacts in the electrical circuit, contact points gradually wear out due to a frequent and repeat operation of the selector lever. This could result in a contact failure, and there is a possibility that the inhibitor switch will not be able to output the INH signal properly. In this case, there is a need to exchange the inhibitor switch. In JP2004-263741, in a case where the wear-out failure occurs and the unmatching range condition occurs, once the control system determines that the unmatching range condition occurs, the controller keeps suppressing the engine rpm and the engine torque until the unmatching range condition is resolved. Therefore, even in case of the wear-out failure, the engine racing and the clutch engagement shock are reduced. Instead, by the reduced or suppressed engine rpm and torque, a state in which the vehicle controllability and traveling performance deteriorate continues, and this state can not be prevented until repair or replacement of the inhibitor switch is made.

That is to say, the clutch engagement control device in JP2004-263741 has been proposed for the purpose of improving of the drivability, in the case where the time delay arises between recognition of the output INH signal for controlling the transmission and movement of the control valve for controlling the clutch engage/disengagement. In other words, it can be achieved on the assumption that the difference in recognition of the shift range between the above two control systems is resolved at a time when a driver's shift operation fully finishes. Because of this, it is possible to improve the drivability for the delay. However, in the case where the unmatching range condition remains due to the inhibitor switch failure, it is not possible to attain the traveling performance of the vehicle until replacement of the inhibitor switch is made.

It is therefore an object of the present invention to provide a control apparatus for an automatic transmission which is capable of protecting the automatic transmission and further achieves a measure of the traveling performance even in a case where the inhibitor switch can not properly detect the shift range selected by driver's shift operation.

According to one aspect of the present invention, a control apparatus for an automatic transmission as defined in claim 1 is provided. Preferred embodiments thereof are defined in dependent claims 2 to 9.

According to a further aspect of the invention, a method for executing failsafe functions as defined in claim 10 is provided. Preferred embodiments thereof are defined in dependent claims 11 to 18.

The other objects and features of this invention will become understood from the following description with reference to the accompanying drawings.

### BRIEF DESCRIPTION OF THE DRAWINGS

FIG. 1 is a schematic diagram showing a whole system of an embodiment of a control apparatus for an automatic transmission according to the present invention.

FIGS. 2A and 2B are graphs showing a set amount of an engine torque. FIG. 2A shows a relationship between the set engine torque and a travel speed. FIG. 2B shows a relationship between the set engine torque and time.

FIG. 3 is a flow chart to explain a control of the automatic transmission.

FIGS. 4A to 4E are time charts to explain respective states or amount and actions of a vehicle with the control apparatus for the automatic transmission. FIG. 4A shows a change of a failure determination of an inhibitor switch. FIG. 4B shows a change of a turbine torque associated with a line pressure control of the automatic transmission with time. FIG. 4C shows a change of the engine torque with time. FIG. 4D shows a change of a flag to control the engine torque amount. FIG. 4E shows a change of the travel speed with time.

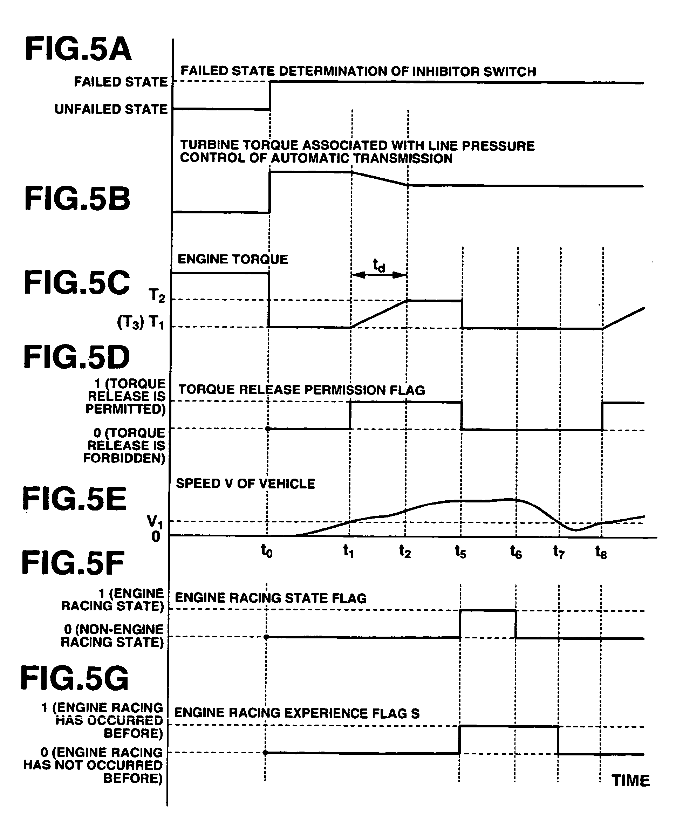

FIGS. 5A to 5G are time charts to explain respective states or amount and actions of the vehicle with the control apparatus for the automatic transmission. FIG. 5A shows a change of a failure determination of an inhibitor switch. FIG. 5B shows a change of a turbine torque associated with a line pressure control of the automatic transmission with time. FIG. 5C shows a change of the engine torque with time. FIG. 5D shows a change of a flag to control the engine torque amount. FIG. 5E shows a change of the travel speed with time. FIG. 5F shows a change of a flag indicating a state of racing of engine. FIG. 5G shows a change of a flag indicating an experience of the engine racing.

### DETAILED DESCRIPTION OF THE INVENTION

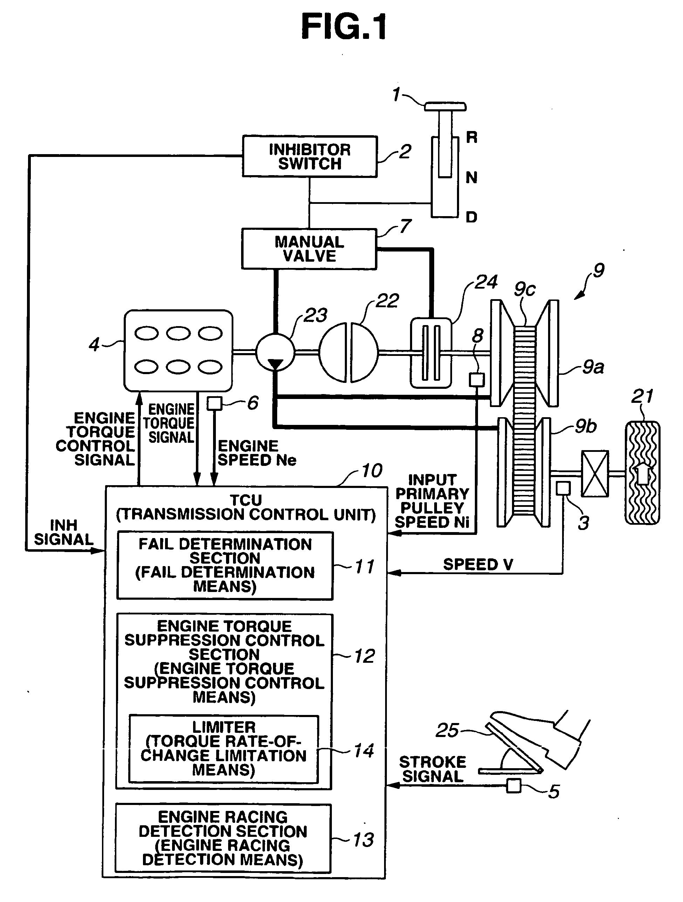

An embodiment of the present invention will be explained below with reference to the drawings. FIG. 1 shows a schematic system diagram of a control apparatus for an automatic transmission in a vehicle. The vehicle comprises a power or motive force transmission mechanism which transfers torque generated in an engine 4 to a drive wheel 21 with a change in the speed through the transmission and a change in the torque and drives the wheel 21. The power transmission mechanism includes a belt-drive continuously variable transmission (a belt-drive CVT, an automatic transmission, or simply, a transmission) 9, a hydraulic pump 23, a torque converter 22, and a clutch device 24.

Hydraulic pump 23 is driven by engine 4 and pumps operating oil to control transmission 9. The operating oil pumped out by hydraulic pump 23 is provided to each primary and secondary pulleys 9a, 9b of transmission 9 and also clutch device 24. Torque converter 22 is connected to an output shaft (a crankshaft) of engine 4, and performs the function of increasing the torque from engine 4. Further, torque converter 22 has a lock-up mechanism inside thereof so as to directly transmit an input driving force from engine 4 to a downstream stage.

In a driveiine of the power transmission mechanism, clutch device 24 is disposed downstream of torque converter 22 in order to control (or connect/disconnect) the input torque transmission from torque converter 22 to transmission 9. In more detail, the control of the torque transmission takes place by engage/disengagement of clutch device 24, and takes place based on a strength of operating oil pressure (working fluid pressure) produced by hydraulic pump 23. In a hydraulic circuit connecting hydraulic pump 23 and clutch device 24, a manual valve 7 is disposed for control of the operating oil pressure delivered to clutch device 24. Regarding a direction of the input torque to transmission 9, it is controlled by means of clutch device 24 and capable of changing to normal-rotational direction or reverse-rotational direction.

Transmission 9 is connected to an output shaft side of engine 4, and has primary and secondary -driving and driven- pulleys 9a, 9b and a belt (exactly, a segmented metal drive-belt) 9c wound around these pulleys 9a, 9b. Upon engagement of clutch device 24, the torque is transferred to primary pulley 9a, further transferred to secondary pulley 9b via belt 9c. A gear ratio of transmission 9 is varied and set according to a ratio between respective winding radii of belt 9c running around primary pulley 9a and secondary pulley 9b. Each of the winding radii of belt 9c, in other words, the effective diameter of the driving pulley and the effective diameter of the driven pulley, is varied and set based on the operating oil pressure produced by hydraulic pump 23. In a hydraulic circuit connecting hydraulic pump 23 and each of the primary and secondary pulleys 9a, 9b, valves (not shown), such as a directional control valve, a pressure reduction valve, a pressure regulator valve, and the like, are disposed to control the operating oil pressure provided to transmission 9.

The control apparatus for the automatic transmission according to the present invention is applied to such the vehicle. The control apparatus for the automatic transmission comprises an operating lever (or a range selector lever) 1, an inhibitor switch 2, a vehicle speed sensor 3, an accelerator pedal stroke sensor 5, an engine rpm sensor 6, a transmission input speed sensor 8, and Transmission Control Unit (TCU, or an engine control unit) 10. When a driver operates selector lever 1, which is provided in a cabin for ratio change, and selects a shift range from a plurality of predetermined shift ranges such as N (neutral), D (drive) and R (reverse), a shift range (or a shift position) of the automatic transmission is set to the selected one of the predetermined shift ranges. Namely that the shift range of the automatic transmission is set by the selector lever 1.

Inhibitor switch 2 is a sensor for detecting an operation position of selector lever 1 (or simply, lever position). Further, inhibitor switch 2 generates a range signal (an inhibitor switch signal, an INH signal) corresponding to the lever position, and outputs the INH signal as a control signal to the input interface of TCU 10. Regarding INH signal, the number of the INH signal is equal to that of the lever position. That is to say, under a normal condition (an unfailed condition) of inhibitor switch 2, there is a one-to-one correspondence between the input INH signal and the range selector lever position. Thus, the input INH signal of the TCU 10 can correspond to the selected shift range. And TCU 10 can recognize the selected shift range when receiving or accepting the INH signal.

With regard to selector lever 1 serving to set the shift position of transmission 9, on the other hand, for connect/disconnect control of a driving force transferred to transmission 9, selector lever 1 is connected to manual valve 7 disposed in the hydraulic circuit associated with the clutch engage/disengagement of clutch device 24. Selector lever 1 therefore directly operates the clutch engage/disengagement of clutch device 24 via manual valve 7. Thus, manual valve 7 is actuated (opened or closed) according to a position operated by selector lever 1. For instance, when the driver operates selector lever 1 and the lever position is at N position, clutch device 24 is released (disengaged), while when the lever position is at D position, clutch device 24 is engaged.

Vehicle speed sensor 3 detects or calculates a speed V of the vehicle on the basis of the number of revolutions of an axle connecting transmission 9 and drive wheel 21. Further, vehicle speed sensor 3 is electrically connected to TCU 10, and the input interface of TCU 10 receives information of the speed V of the vehicle. Accelerator pedal stroke sensor 5 detects a depression amount of an accelerator pedal 25, and outputs an eiectricai signal (as a stroke signal) according to the depression amount to the TCU 10. That is, a strength of the stroke signal corresponds to the depression amount, and TCU 10 recognizes the depression amount of an accelerator pedal 25.

Engine rpm sensor 6 detects the number of revolutions Ne of engine 4 (simply, an engine speed Ne), and information about engine speed Ne is sent to TCU 10. Input speed sensor 8 detects the number of revolutions Ni of primary pulley 9a (simply, an input primary pulley speed Ni), and information about input primary pulley speed Ni is sent to TCU 10.

In the shown embodiment, engine 4 outputs an electrical signal (as an engine torque signal) corresponding to the magnitude of engine torque to TCU 10 at any time.

Next, a control function of the TCU 10 will be explained below. TCU 10 is a controller for control of each operation of engine 4, clutch device 24 and transmission 9 on the basis of input informational data signals from the engine/vehicle sensors/switches. TCU 10 outputs an engine torque control signal to engine 4, and controls a fuel injection quantity, an ignition timing and an intake-air quantity etc.. And thus, the amount of torque produced by engine 4 is controlled. Further, TCU 10 controls a strength of the pressure of operating oil discharged from hydraulic pump 23. For example, each of the pressure of operating oil delivered to primary and secondary pulleys 9a, 9b are controlled, thus TCU 10 can control the gear ratio of transmission 9. In addition, TCU 10 controls a clutch engagement pressure of clutch device 24 by controlling the pressure of operating oil fed from hydraulic pump 23 to clutch device 24 via manual valve 7.

The central processing unit (the processor) of TCU 10 includes a fail determination section (a fail determination means) 11, an engine torque suppression control section (an engine torque suppression control means) 12, and an engine racing detection section (an engine racing detection means) 13 as functional components for engine torque control.

With the fail determination section 11, in a case where none of control signals (i.e. none of INH signals) corresponding to the lever positions is sent or entered from inhibitor switch 2 to TCU 10, fail determination section 11 judges that inhibitor switch 2 fails to output the INH signal, and then fail determination section 11 is configured to determine that inhibitor switch 2 is in a "failed state". Here, the failed state means that a state in which inhibitor switch 2 does not function properly or does not function well. For example, in the following cases ((a), (b), (c)) etc., fail determination section 11 determines that inhibitor switch 2 is in the failed state. (a) the INH signal indicates not the predetermined INH signal but a multiple signal, (b) the INH signal is not detected (no signal is detected), (c) a signal which is not predetermined is detected (an undefined signal is detected). In contrast, in a case where the input INH signal of the TCU 10 from inhibitor switch 2 is any one of the predetermined INH signals, fail determination section 11 determines that inhibitor switch 2 is in an unfailed state (namely, in a normal state).

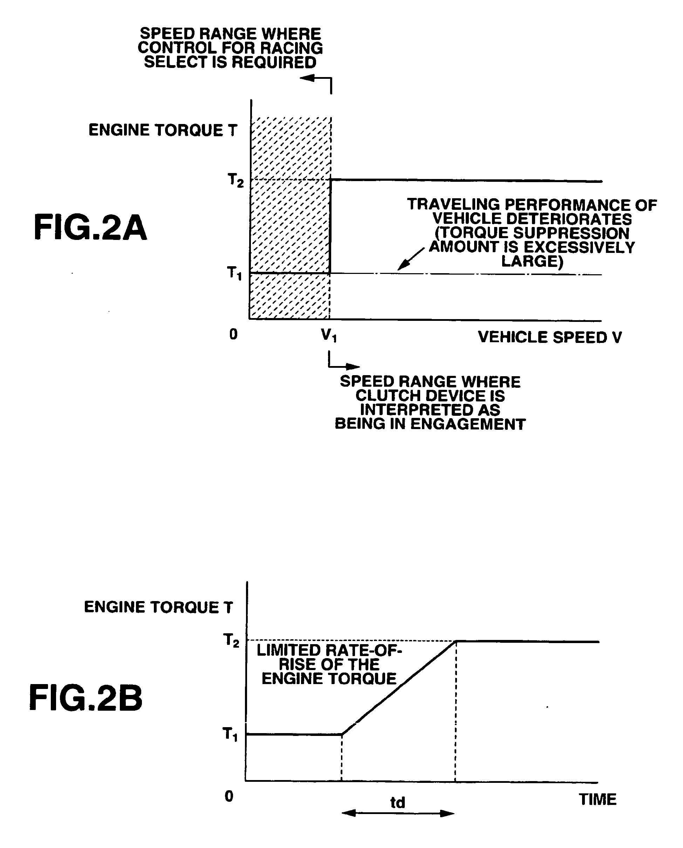

With the engine torque suppression controi section 12, when fail determination section 11 determines that inhibitor switch 2 is in the failed state, engine torque suppression control section 12 is configured to execute a control for suppressing an engine's output in accordance with the speed V of the vehicle detected by speed sensor 3. More specifically, an engine's output torque is controlled or set according to a relationship between the torque and the vehicle speed V as shown in Fig. 2A. When the vehicle speed V is less than a first predetermined speed V1 (V < V1), the engine's output torque is suppressed such that an output torque T of engine 4 is set to a first predetermined torque T1. While when the vehicle speed V is greater than or equal to the first predetermined speed V1 (V ≧ V1), the engine's output torque is suppressed such that the output torque T is set to a second predetermined torque T2 which is greater than T1 (i.e., T2 > T1).

T1 and T2 are set such that both of the T1 and T2 are smaller than an engine's output torque obtained during normal conditions. That is, in the case of the failed state of inhibitor switch 2, the engine's output torque T is suppressed or reduced as compared with the normal torque set value, which is generally determined based on engine/vehicle operating conditions, such as the vehicle speed V and the accelerator opening corresponding to the signal from stroke sensor 5, indicating the accelerator-pedal depression amount. Then, as shown in Fig. 2A, a degree or level of the suppression of the engine's output torque is controlled according to the vehicle speed V.

Here, the reason why the engine's output torque T is set to T1 or T2 depending on the vehicle speed V will be explained below. When the fail determination section 11 determines that inhibitor switch 2 is in the failed state, the fail determination section 11 can not accurately recognize the lever position operated by the driver. Under these circumstances, if an abrupt acceleration takes place by operating and shifting selector lever 1 from N position to D position (i.e. engaging clutch device 24) after the engine speed Ne has increased under the neutral condition (clutch device 24 is released), in sum, if the so-called racing select is operated, an excessive torque is transferred to transmission 9. And therefore, there is a risk that a large torque shock may occur. Moreover, in a case of the use of the belt-drive CVT as the transmission 9 as this embodiment, belt 9c may slip by an abrupt incoming torque. Because of this, in terms of the protection of transmission 9 from the incoming excessive torque, it is preferable to diminish a change of the incoming torque to transmission 9 certainly by constantly controlling the torque. Therefore, the output torque T needs to be suppressed so that an amount of the torque suppression is set to a predetermined amount as indicated by a dot-dash line in Fig. 2A.

However, conditions under which the torque shock and the belt slip occur due to the abrupt incoming torque differ depending on the speed V of the vehicle. At the vehicle start when clutch device 24 becomes engaged, or at the low-speed conditions in which the racing select tends to be operated, the torque shock and the belt slip tend to occur. On the other hand, under stationary driving conditions in which the vehicle speed V reaches a measure of speed (V ≧V1), clutch device 24 is completely engaged, and therefore the torque shock and the belt slip does not occur. Thus, for the stationary driving conditions (V ≧V1), the above torque suppression amount indicated by the dot-dash line is excessively large as the suppressing control for protecting transmission 9; on the contrary the vehicle traveling performance deteriorates. For this reason, in this embodiment, as shown in Fig. 2A, in a traveling or driving region in which the vehicle speed V is less than V1 (V < V1) (for example, around 10 km/h), the engine torque is controlled such that torque-down takes place for the racing select control; conversely, in a traveling region in which the vehicle speed V is greater than or equal to V1 (V ≧ V1) and clutch device 24 is interpreted as being in engagement, the torque suppression is released or the torque suppression amount is reduced, and the engine torque is set to increase. Furthermore, as for the reason why the engine torque T is set to T2 under the condition where the speed V is greater than or equal to V1 (V ≧ V1), this suppression (T is set to T2) can inform the driver of the failed state of inhibitor switch 2 while achieving a measure of the traveling performance. Or conversely, if the torque is not suppressed because of no torque shock and no belt slip in the region (V ≧ V1), the driver can not recognize the failed state. Accordingly, T1 and T2 are both provided and the engine's output torque T is set to T1 or T2 depending on the vehicle speed V. And thus, for the region in which the vehicle speed V reaches a measure of speed (V ≧ V1), the traveling performance of the vehicle can improve without the torque shock and the belt slip.

In the above suppression control, when suppressing the engine torque, in order to suppress or limit an abrupt change of the torque, engine torque suppression control section 12 has a limiter or a torque rate-of-change limitation section (a torque rate-of-change limitation means) 14 for limiting a time rate of rise of the engine torque. In more detail, as shown in Fig. 2B, when the engine torque T is changed from T1 to T2, in order for a coefficient of variation of the torque per unit time not to become excessive, the engine torque T is controlled so that it takes a predetermined time t_{d} to change from T1 to T2. Limiter 14 performs a function of controlling the torque amount in this way.

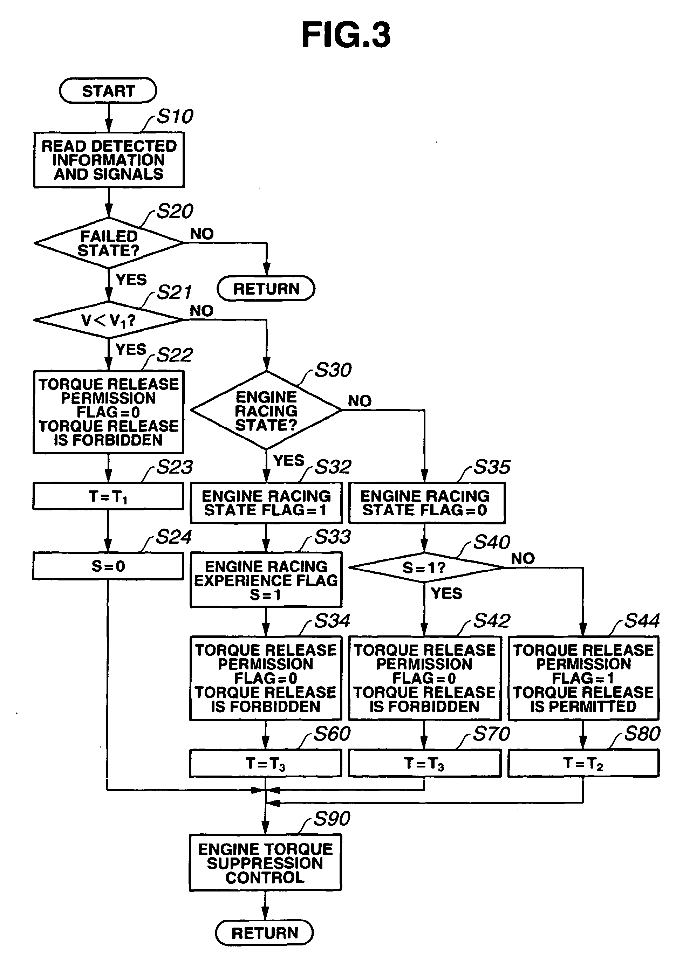

In this embodiment, furthermore, engine torque suppression control section 12 is configured so that a torque release permission flag is set or reset, which indicates whether or not the control of the torque suppression is taking place. The torque release permission flag is reset to "0" or set to "1" under the failed state of inhibitor switch 2. The details of the setting and resetting of the torque release permission flag will be hereinafter described in reference to the flow chart of Fig.3. And execution states of the control for suppressing the engine torque (forbidding the torque release) or the control for diminishing the amount of the torque suppression (releasing the engine torque, permitting the torque release) are indicated by the torque release permission flag. (here, "torque release" means that the suppression of the engine torque is released) Additionally, when the vehicle speed V is in a speed range where the control for the racing select is desired or required, such as at the vehicle start or at low-speed traveling, the torque release permission flag is reset to "0", namely that the engine torque is suppressed. While when the vehicle speed V increases and it is out of the speed range, the flag is set to "1", namely that the engine torque is not suppressed or the torque suppression amount is reduced.

With the engine torque suppression control section 12, when fail determination section 11 determines that inhibitor switch 2 is in the unfailed state, engine torque suppression control section 12 is configured not to execute the engine's output suppression control.

With the engine racing detection section 13, when fail determination section 11 determines that inhibitor switch 2 is in the failed state, engine racing detection section 13 is configured to detect a racing state of the engine on the basis of information and signals from each sensor to TCU 10, such as the stroke signal detected by accelerator pedal stroke sensor 5, the engine torque signal from engine 4, the engine speed Ne detected by engine rpm sensor 6, and others. More specifically, engine racing detection section 13 calculates or retrieves an estimated engine speed of engine 4 based on the input primary pulley speed Ni detected by input speed sensor 8, the engine torque signal from engine 4 and a predetermined characteristic map, and further compares the estimated engine speed to the actually detected engine speed Ne, and thereby detects the engine racing state of engine 4. Here, the engine racing is a phenomenon in which the engine speed Ne increases and becomes excessively high by pressing down on the accelerator pedal 25 while the clutch device 24 is disengaged.

When engine racing detection section 13 detects the engine racing state of engine 4 (when the actually detected engine speed Ne is greater than the estimated engine speed), engine torque suppression control section 12 is further configured to suppress the engine's output torque T regardless of the vehicle speed V so that the engine's output torque T is set to a third predetermined torque T3. That is to say, in the case of the engine racing state, clutch device 24 is interpreted as being in disengagement. Therefore, even the region in which the vehicle speed V reaches a measure of speed, there is a possibility that the torque shock and the belt slip will occur owing to the abrupt change of the torque. Because of this, when the engine racing state of engine 4 is detected, the engine's output torque T is immediately suppressed by the control of engine torque suppression control section 12. Further, in the shown embodiment, the third predetermined torque T3 is set such that T3 and T1 are equal in value.

As a flag which indicates the engine racing state of engine 4, an engine racing state flag is set. When the engine racing is detected, the engine racing state flag is set to "1". While when the engine racing is not detected, the engine racing state flag is reset to "0". In addition to the engine racing state flag, an engine racing state detection experience flag S (simply, an engine racing experience flag S) is set. The engine racing detection section 13 is configured so that once the engine racing state flag is set to "1", the engine racing experience flag S is set to "1" (S=1). The engine racing state flag indicates whether or not a current state is in the engine racing state, whereas the engine racing experience flag S indicates whether the engine racing has ever occurred. In other words, information that the engine racing occurred is stored and indicated by the engine racing experience flag S. As mentioned above, once the engine racing state flag is set to "1", the engine racing experience flag S is set to "1" (S=1). Furthermore, once the engine racing experience flag S is set to "1" (S=1), even if the engine racing state flag changes from "1" to "0" after the flag S is set to "1", the engine racing experience flag S remains unchanged (still S=1) until the vehicle speed V becomes less than V1. The engine racing experience flag S is reset to "0" (S=0) only after the vehicle speed V of the vehicle becomes less than V1. In this manner, once the engine racing of engine 4 is detected, engine racing detection section 13 is configured to judge that the engine racing state has continued (still continues) or the engine racing is occurring until the vehicle speed V becomes less than V1. And engine torque suppression control section 12 continues suppressing the engine's output torque T to T3 until the vehicle speed V becomes less than V1.

Next, a control flow for the engine torque suppression control for the inhibitor switch failure will be explained. In this embodiment, the control apparatus for the automatic transmission executes the control in accordance with the control flow as shown in Fig. 3. The control according to the control flow is executed as time-triggered interrupt routines to be triggered every predetermined time intervals at TCU 10. In the case where inhibitor switch 2 is in the unfailed state, this control is not executed, a normal control is executed (an explanation of the normal control is omitted here).

At step S10, input information (INH signal, vehicle speed V, stroke signal, engine torque signal, engine speed Ne, input primary pulley speed Ni) is read at TCU 10.

At step S20, a check is made at fail determination section 11 to determine whether or not inhibitor switch 2 is in the failed state. That is, a check is made to determine whether or not the input INH signal of the TCU 10 from inhibitor switch 2 is any one of the predetermined INH signals.

When fail determination section 11 determines that inhibitor switch 2 is in the failed state, the routine proceeds from step S20 to step S21; conversely, when fail determination section 11 determines that inhibitor switch 2 is in the unfailed state, one execution cycle of the routine terminates. That is, when inhibitor switch 2 is in the unfailed state, the engine torque suppression control is not executed, a normal control is executed.

At step S21, a check is made to determine whether or not the vehicle speed V is less than the first predetermined speed V1 (V < V1 ?). When determined that V < V1 (i.e. the vehicle is at low speed), the routine proceeds to step S22, and the torque release permission flag is reset to "0" (namely that the torque release is forbidden). Further, the routine proceeds from step S 22 to steps S23 and S24.

At step S23, the engine torque T is controlled and set to the first predetermined torque T1.

At step S24, the engine racing experience flag S is reset to "0". At this step, if the engine racing experience flag S remains at "1", the flag S is reset to "0". And engine racing detection section 13 determines that the engine racing state is finished by this resetting, although engine racing detection section 13 determined that the engine racing was occurring by the flag S (S=1) before this resetting.

Subsequently, at step S90, the engine's output torque is suppressed such that the engine's output torque T is set to T1, and the flow is terminated. Accordingly, in this case, by the control for suppressing and setting the engine torque to T1, transmission 9 is protected from the torque shock and the belt slip.

On the other hand, returning to step S21, when determined that the vehicle speed V is not less than V1 (i.e. V ≧ V1), the routine proceeds to step S30.

At step S30, a check is made at engine racing detection section 13 to determine whether or not engine 4 is in the engine racing state. As previously described, engine racing detection section 13 calculates the estimated engine speed based on the input primary pulley speed Ni and the engine torque signal which are read at TCU 10, and compares the estimated engine speed to the actually detected engine speed Ne, and thereby detects the engine racing or determines the engine racing state. When the engine racing is detected, the routine proceeds from step S30 to step S32, and the engine racing state flag is set to "1" (engine 4 is in the engine racing state). Further, the routine proceeds to step S33, and the engine racing experience flag S is set "1" (S=1), and at step S34, the torque release permission flag is reset to "0" (the torque release is forbidden). Further, the routine proceeds from step S34 to step S 60, the engine torque is set to the third predetermined torque T3. Afterwards, at step S90, the suppression control is executed so that the engine torque is set to T3, and the flow is terminated.

Accordingly, when inhibitor switch 2 is in the failed state and additionally engine 4 is in the engine racing state, the engine's output torque is suppressed and set to T3 regardless of the vehicle speed V, even when V ≧ V1. As previously described, once the engine racing is detected, the engine racing experience flag S is set to "1" (S=1) at step S33, the information that the engine racing occurred is stored.

Returning to step S30, when the engine racing is not detected, the routine proceeds to step S35, and the engine racing state flag is reset to "0" (engine 4 is not in the engine racing state), and further the routine proceeds to step S40.

At step S40, a check is made to determine whether or not the engine racing experience flag S is "1" (S=1 ?). When the flag S is "1" (S=1), the routine proceeds to step S 42, and the torque release permission flag is reset to "0" (the torque release is forbidden). Afterwards, at step S70, the engine torque is set to the third predetermined torque T3. Further, at step S90, the suppression control is executed so that the engine torque is set to T3, and the flow is terminated. In this case, although the engine racing is not actually occurring, engine racing detection section 13 judges that the engine racing state has continued or the engine racing is occurring, and the engine torque is suppressed. Accordingly, by the control for suppressing and setting the engine torque to T3, it is possible to prevent or avoid undesirable torque shock and belt slip from occurring within transmission 9.

Returning to step S40, when the flag S is not "1" (i.e. S=0), the routine proceeds to step S 44, and the torque release permission flag is set to "1" (the release of engine torque suppression is permitted). Subsequently, at step S80, the engine torque is set to the second predetermined torque T2 (> T3=T1). Further, at step S90, the suppression control is executed so that the engine torque is set to T2, and the flow is terminated. In this case, by control for releasing the torque suppression or control for reducing the torque suppression amount, the traveling performance of the vehicle can improve.

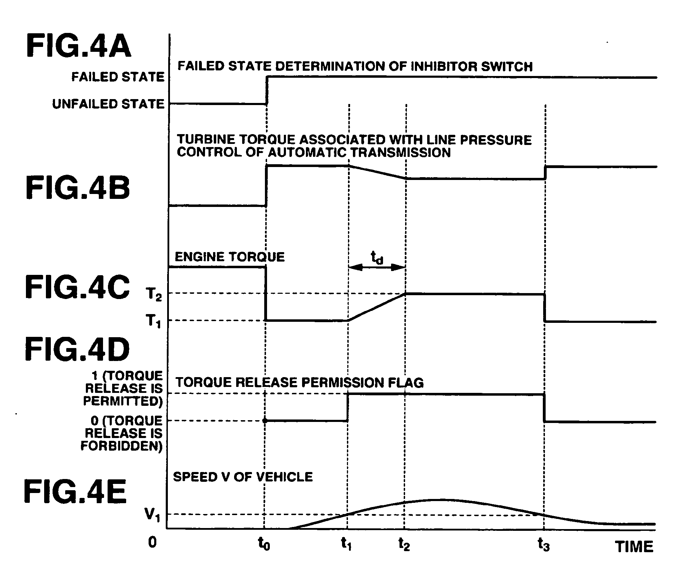

Next, time charts of the engine torque and speed V etc. by the above control will be explained with reference to Fig. 4. Fig. 4 shows a case where inhibitor switch 2 fails or breaks down and a fail state determination takes place, for example, the vehicle moves to repair the inhibitor switch 2. Fig. 4A is a change of the fail state determination of inhibitor switch 2. Fig. 4B is a change of a turbine torque associated with a line pressure control of the automatic transmission with time. Fig. 4C shows a change of the engine torque. Fig. 4D is a change of the torque release permission flag to set the torque suppression amount. Fig. 4E shows a change of the vehicle speed V.

Firstly, in the engine halt state, at time t = t₀, fail determination section 11 determines that inhibitor switch 2 is in the failed state (Fig. 4A). At this time, a torque of hydraulic pump 23 for providing the operating oil pressure to primary and secondary pulleys 9a, 9b is controlled to increase to a predetermined pressure in order to prevent the belt slip of belt 9c (Fig. 4B). On the other hand, the engine torque is set to T1 by the suppression control in order for the excessive torque not to be transferred to transmission 9 (Fig. 4C). Further, the torque release permission flag is reset to "0" at t = to (Fig. 4D). Then, this torque suppressed state where the engine torque is set to T1 (simply, T1 torque suppressed state) continues until t = t₁ when the vehicle starts and speed V reaches V1.

By this torque suppression, at the vehicle start when clutch device 24 becomes engaged, or at the low-speed conditions in which the racing select tends to be operated, it is possible to protect transmission 9.

Next, when the vehicle speed V becomes greater than or equal to V1 (V ≧ V1) at t = t₁, clutch device 24 is interpreted as being in engagement, and the torque release permission flag is set to "1" (Fig. 4D). And then, the torque suppression amount is gradually reduced and the engine torque is controlled to increase (Fig. 4C). When controlled to increase, the engine torque is set to T2 such that it takes the predetermined time t_{d} to change from T1 to T2 by the function of limiter 14 of engine torque suppression control section 12. That is, the engine torque gradually increases from T1 to T2 during time t_{d} from t₁ to t₂.

By this control, the engine torque can be controlled to increase without sharp or rapid change. And therefore, the torque shock is prevented and transmission 9 can be protected, also the traveling performance of the vehicle can improve. Additionally, with hydraulic pump 23, as shown in Fig. 4B, by reducing the turbine torque with increase of the engine torque from T1 to T2, it is possible to keep a temperature of the operating oil in the hydraulic circuit within a proper range.

At t = t₂, the engine torque is set to T2, and this torque suppressed state where the engine torque is set to T2 (simply, T2 torque suppressed state) continues until t = t₃. Here, the engine torque in the T2 torque suppressed state is greater as compared with that in the T1 torque suppressed state. Therefore, the above mentioned, the vehicle traveling performance can improve. On the other hand, the engine torque in the T2 torque suppressed state is smaller as compared with that in the normal conditions. This enables the driver to notice the inhibitor switch failure effectively and prompt the driver to change the inhibitor switch.

When the speed V becomes less than V1 (V < V1) at t = t₃, the engine torque is controlled to increase as shown in Fig. 4C. Accordingly, even if the racing select is operated under this condition, the excessive torque is not transferred to transmission 9, and thus protects transmission 9.

Next, time charts of a case where inhibitor switch 2 is in the failed state and the engine racing takes place by the driver during traveling will be explained with reference to Fig. 5.

Firstly, in the engine halt state, at time t = t₀, fail determination section 11 determines that inhibitor switch 2 is in the failed state (Fig. 5A). When the speed V becomes greater than or equal to V1 (V ≧ V1) at t = t₁, clutch device 24 is interpreted as being in engagement, and the torque release permission flag is set to "1" (Fig. 5D). Further, in the same manner as Fig. 4, the torque suppression amount is gradually reduced and the engine torque gradually increases from T1 to T2 during time t_{d} from t₁ to t₂. Then, at t = t₂, the engine torque is set to T2.

Subsequently, when the engine racing takes place by the driver at t = t₅, the engine racing state flag is set to "1" (the engine is in the engine racing state) (Fig. 5F). Further, regardless of the vehicle speed V, the engine torque T is set to the third predetermined torque T3 by the suppression control (herein, T3 is set such that T3 and T1 are equal in value) (Fig. 5C). That is, as previously described, when the engine racing state of engine 4 is detected, clutch device 24 is interpreted as being in disengagement, then the engine torque T is immediately suppressed. By this control, transmission 9 is protected from the torque shock and the belt slip caused by the abrupt change of the torque.

When the engine racing is not detected at t = t₆, the engine racing state flag is reset to "0" (the engine is not in the engine racing state) (Fig. 5F). However, as shown in Fig. 5G, once the engine racing is detected at t = t₅, the engine racing experience flag S is set to "1" (S=1), and engine racing detection section 13 judges that the engine racing state has continued or the engine racing is occurring until the speed V becomes less than V1. Therefore, as shown in Figs. 5F and 5C, even though the engine racing state flag changes from "1" to "0" at t = t₆, the engine torque continues being set to T3. Accordingly, in this suppression control, the information that the engine racing occurred is stored and the engine torque is certainly suppressed, and thereby preventing an occurrence of the torque shock before it occurs.

Afterwards, when the speed V becomes less than V1 (V < V1) at t = t₇, the engine racing experience flag S is reset to "0" (S=0) (Fig. 5G), and engine racing detection section 13 determines that the engine racing finishes or the engine racing state is over. However, by the previously described suppression control based on the vehicle speed V, the torque release permission flag remains at "0" (because of V < V1) (Fig. 5D). Thus, the engine torque is suppressed such that the engine torque is set to T1 (as mentioned above, here, T1 = T3).

When the speed V becomes greater than or equal to V1 (V ≧ V1) at t = t₈, the torque suppression amount is gradually reduced. And the engine torque gradually increases and is set to T2 again (Fig. 5C). It is therefore possible to improve the traveling performance again, and also to protect transmission 9 even the case of the suppression control with the engine racing state.

As discussed above, under the inhibitor switch failure condition, the control apparatus for the automatic transmission makes it possible to control for suppressing the engine output torque in accordance with the vehicle speed. At the low speed, the engine torque is suppressed and thereby protecting the automatic transmission. On the other hand, in the cases of middle or high speed as well, the torque is suppressed, but its suppression amount is not as large as that of the low speed. And therefore, the traveling performance can be improved, in addition, the automatic transmission is protected because of the suppressed incoming torque. Accordingly, it is possible to provide the control apparatus executing the suitable torque control for driving state.

In the shown embodiment, the control apparatus for the automatic transmission is applied to the vehicle which is provided with the belt-drive CVT as the transmission 9, and it is explained above. However, as regards the transmission controlled by the control apparatus, its type is not limited, but must be at least the automatic transmission. Further, in the embodiment, engine racing detection section 13 is configured to detect the engine racing based on the information and signals from each engine/vehicle sensor, such as the stroke signal, the input primary pulley speed Ni, the engine speed Ne, and others. However, regarding a system or constituent elements to detect the engine racing, these can be optionally formed, or the TCU 10 may be formed without the engine racing detection section 13.

Furthermore, with respect to T1, T2 and T3, their amount can be set to an arbitrary value depending on the type of the transmission. Moreover, predetermined time t_{d} is also able to be set to an arbitrary value. As for the predetermined time t_{d}, namely that a rate of change of the engine output torque with respect to time can be set to an arbitrary value. Then, limiter 14 is configured to limit the time rate of change of the engine output torque to less than the arbitrary predetermined rate of change.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A control apparatus for an automatic transmission (9) connected to an output shaft of an engine (4) of a vehicle, comprising:
an operating lever (1) that sets a shift range of the automatic transmission (9) by selecting one of a plurality of predetermined shift ranges;
an inhibitor switch (2) that generates a range signal corresponding to the shift range selected by the operating lever (1) as an inhibitor switch signal;
a vehicle speed sensor (3) that detects a speed (V) of the vehicle; and
an engine control unit (10) configured to be electrically connected to the inhibitor switch (2) and the vehicle speed sensor (3) for responding to a failure in the inhibitor switch (2);
**characterized in that,**
the engine control unit (10) suppresses an output torque of the engine (4) in accordance with the vehicle speed (V), under a specified condition where none of predefined inhibitor switch signals corresponding to the plurality of predetermined shift ranges is entered from the inhibitor switch (2) to the engine control unit (10).

2. The control apparatus for the automatic transmission (9) according to claim 1, wherein the engine control unit (10) comprises:
a fail determination section (11) for determining, based on the inhibitor switch signal, whether the inhibitor switch (2) is in a failed state; and
an engine torque suppression control section (12) for suppressing an output torque of the engine (4) in accordance with the vehicle speed (V), when the fail determination section (11) determines that the inhibitor switch (2) is in the failed state.

3. The control apparatus for the automatic transmission as claimed in claim 2, wherein:
the fail determination section (11) determines that the inhibitor switch (2) is in the failed state, when said none of predefined inhibitor switch signals corresponding to the plurality of predetermined shift ranges is entered from the inhibitor switch (2) to the engine control unit (10).

4. The control apparatus for the automatic transmission as claimed in claim 2, wherein:
the engine torque suppression control section (12) is configured to suppress the engine output torque so that the engine output torque is set to a first predetermined torque (T1), when the fail determination section (11) determines that the inhibitor switch (2) is in the failed state, and additionally the vehicle speed (V) is less than a first predetermined speed (V1).

5. The control apparatus for the automatic transmission as claimed in claim 4, wherein:
the engine torque suppression control section (12) is configured to suppress the engine output torque so that the engine output torque is set to a second predetermined torque (T2) which is greater than the first predetermined torque (T1), when the fail determination section (11) determines that the inhibitor switch (2) is in the failed state, and additionally the vehicle speed (V) is greater than or equal to the first predetermined speed (V1).

6. The control apparatus for the automatic transmission as claimed in claim 5, wherein:
the engine torque suppression control section (12) includes a torque rate-of-change limitation section (14) for limiting a rate of change ((T2-T1)/td) of the engine output torque with respect to time to less than a predetermined time rate of change.

7. The control apparatus for the automatic transmission as claimed in at least one of the preceding claims 2 to 6, wherein:
the engine control unit (10) further comprises an engine
racing detection section (13) that detects an engine-racing state; and
the engine torque suppression control section (12) is configured to suppress the engine output torque regardless of the vehicle speed (V) so that the engine output torque is set to a third predetermined torque (T3), when the fail determination section (11) determines that the inhibitor switch (2) is in the failed state, and
additionally the engine racing detection section (13) detects the engine racing state of the engine (4).

8. The control apparatus for the automatic transmission as claimed in claim 7, wherein:
once the engine racing detection section (13) detects the engine-racing state of the engine (4), the engine torque suppression control section (12) is configured to continue suppressing the engine output torque to the third predetermined torque (T3) until the vehicle speed (V) becomes less than the first predetermined speed (V1).

9. The control apparatus for the automatic transmission as claimed in at least one of the preceding claims 2 to 8, wherein:
the fail determination section (11) determines that the inhibitor switch (2) is in the failed state, when a multiple signal is generated from the inhibitor switch (2), when there is no signal output from the inhibitor switch (2), or when an undefined signal is generated from the inhibitor switch (2).

10. A method for executing failsafe functions for a computer-controlled automatic transmission (9) connected to an output shaft of an engine (4) of a vehicle employing an operating lever (1) setting a shift range of the automatic transmission (9) by selecting one of a plurality of predetermined shift ranges, an inhibitor switch (2) generating a range signal corresponding to the shift range selected by the operating lever (1) as an inhibitor switch signal, and a vehicle speed sensor (3) detecting a speed (V) of the vehicle, the method comprising:
determining, based on the inhibitor switch signal,
whether the inhibitor switch (2) is in a failed state;
**characterized in that,**
said method further comprises:
setting a torque suppression amount of an output torque of the engine (4) depending on the vehicle speed (V), when determining the failed state of the inhibitor switch (2); and
suppressing the engine output torque according to the torque suppression amount set under the failed state of the inhibitor switch (2).

11. The method as claimed in claim 10, further comprising:
determining that the inhibitor switch (2) is in the failed state when there is no output of either one of predefined inhibitor switch signals corresponding to the plurality of predetermined shift ranges.

12. The method as claimed in claim 10, further comprising:
determining that the inhibitor switch (2) is in the failed state when a multiple signal is generated from the inhibitor switch (2), when there is no signal output from the inhibitor switch (2), or when an undefined signal is generated from the inhibitor switch (2).

13. The method as claimed in at least one of claims 10 to 12, further comprising:
suppressing the engine output torque to a first predetermined torque (T1), when the vehicle speed (V) is less than a first predetermined speed (V1) under the failed state of the inhibitor switch (2).

14. The method as claimed in claim 13, further comprising:
suppressing the engine output torque to a second predetermined torque (T2) which is greater than the first predetermined torque (T1), when the vehicle speed (V) is greater than or equal to the first predetermined speed (V1) under the failed state of the inhibitor switch (2).

15. The method as claimed in claim 14, further comprising:
limiting a rate of increase ((T2-T1)/td) of the engine output torque with respect to time to less than a predetermined time rate of change when shifting from the first predetermined torque (T1) to the second predetermined torque (T2).

16. The method as claimed in at least one of claims 10 to 15, further comprising:
detecting an engine-racing state; and
suppressing the engine output torque to a third predetermined torque (T3) regardless of the vehicle speed (V), under the failed state of the inhibitor switch (2) and additionally in the engine-racing state.

17. The method as claimed in claim 16, further comprising:
once the engine-racing state of the engine (4) has been detected,
continuing suppressing the engine output torque to the third predetermined torque (T3) until the vehicle speed (V) becomes less than the first predetermined speed (V1).

18. The method as claimed in either one of claims 16 to 17, wherein:
the third predetermined torque (T3) is equal to the first predetermined torque (T1).

## Patentansprüche

1. Steuervorrichtung für ein Automatikgetriebe (9), das mit einer Ausgabewelle eines Motors (4) eines Fahrzeuges verbunden ist, umfassend:
einen Betätigungshebel (1), der einen Gangschaltbereich des Automatikgetriebes (9) durch Auswählen eines aus einer Mehrzahl von vorbestimmten Gangschaltbereichen einstellt;
einen Verhindererschalter (2), der ein Bereichssignal entsprechend dem durch den Betätigungshebel (1) ausgewählten Gangschaltbereich als Verhindererschaltersignal erzeugt;
einen Fahrzeuggeschwindigkeitssensor (3), der eine Geschwindigkeit (V) des Fahrzeuges erfasst; und
eine Motorsteuereinheit (10), die dafür ausgelegt ist, elektrisch mit dem Verhindererschalter (2) und dem Fahrzeuggeschwindigkeitssensor (3) verbunden zu werden, um auf ein Versagen des Verhindererschalters (2) zu reagieren;
**dadurch gekennzeichnet, dass**
die Motorsteuereinheit (10) ein Ausgabedrehmoment des Motors (4) entsprechend der Fahrzeuggeschwindigkeit (V) unter einer spezifischen Bedingung unterdrückt, in der keines von vordefinierten Verhindererschaltersignalen entsprechend der Mehrzahl von vorbestimmten Gangschaltbereichen von dem Verhindererschalter (2) in die Motorsteuereinheit (10) eingegeben wird.

2. Steuervorrichtung für das Automatikgetriebe (9) nach Anspruch 1, wobei die Motorsteuereinheit (10) umfasst:
einen Versagensbestimmungsabschnitt (11) zum auf Grundlage des Verhindererschaltersignals erfolgenden Bestimmen, ob der Verhindererschalter (2) in einem Versagenszustand ist; und
einen Motordrehmomentunterdrückungssteuerabschnitt (12), der ein Ausgabedrehmoment des Motors (4) entsprechend der Fahrzeuggeschwindigkeit (V) unterdrückt, wenn der Versagensbestimmungsabschnitt (11) bestimmt, dass der Verhindererschalter (2) in dem Versagenszustand ist.

3. Steuervorrichtung für das Automatikgetriebe nach Anspruch 2, wobei:
der Versagensbestimmungsabschnitt (11) bestimmt, dass der Verhindererschalter (2) in dem Versagenszustand ist, wenn keines von den vordefinierten Verhindererschaltersignalen entsprechend der Mehrzahl von vorbestimmten Gangschaltbereichen von dem Verhindererschalter (2) in die Motorsteuereinheit (10) eingegeben wird.

4. Steuervorrichtung für das Automatikgetriebe nach Anspruch 2, wobei:
der Motordrehmomentunterdrückungssteuerabschnitt (12) dafür ausgelegt ist, das Motorausgabedrehmoment derart zu unterdrücken, dass das Motorausgabedrehmoment auf ein erstes vorbestimmtes Drehmoment (T1) eingestellt wird, wenn der Versagensbestimmungsabschnitt (11) bestimmt, dass der Verhindererschalter (2) in dem Versagenszustand ist und zusätzlich die Fahrzeuggeschwindigkeit (V) kleiner als eine erste vorbestimmte Geschwindigkeit (V1) ist.

5. Steuervorrichtung für das Automatikgetriebe nach Anspruch 4, wobei:
der Motordrehmomentunterdrückungssteuerabschnitt (12) dafür ausgelegt ist, das Motorausgabedrehmoment derart zu unterdrücken, dass das Motorausgabedrehmoment auf ein zweites vorbestimmtes Drehmoment (T2), das größer als das erste vorbestimmte Drehmoment (T1) ist, eingestellt wird, wenn der Versagensbestimmungsabschnitt (11) bestimmt, dass der Verhindererschalter (2) in dem Versagenszustand ist und zusätzlich die Fahrzeuggeschwindigkeit (V) größer oder gleich der ersten vorbestimmten Geschwindigkeit (V1) ist.

6. Steuervorrichtung für das Automatikgetriebe nach Anspruch 5, wobei:
der Motordrehmomentunterdrückungssteuerabschnitt (12) einen Drehmomentänderungsratenbegrenzungsabschnitt (14) beinhaltet, der eine Änderungsrate ((T2-T1) / td) des Motorausgabedrehmomentes in Bezug auf die Zeit auf weniger als eine vorbestimmte Zeitänderungsrate begrenzt.

7. Steuervorrichtung für das Automatikgetriebe nach wenigstens einem der vorhergehenden Ansprüche 2 bis 6, wobei:
die Motorsteuereinheit (10) des Weiteren einen Motordurchdreherfassungsabschnitt (13) umfasst, der einen Motordurchdrehzustand erfasst; und
der Motordrehmomentunterdrückungssteuerabschnitt (12) dafür ausgelegt ist, das Motorausgabedrehmoment unabhängig von der Fahrzeuggeschwindigkeit (V) derart zu unterdrücken, dass das Motorausgabedrehmoment auf ein drittes vorbestimmtes Drehmoment (T3) eingestellt wird, wenn der Versagensbestimmungsabschnitt (11) bestimmt, dass der Verhindererschalter (2) in dem Versagenszustand ist und zusätzlich der Motordurchdreherfassungsabschnitt (13) den Motordurchdrehzustand des Motors (4) erfasst.

8. Steuervorrichtung für das Automatikgetriebe nach Anspruch 7, wobei:
sobald der Motordurchdreherfassungsabschnitt (13) den Motordurchdrehzustand des Motors (4) erfasst, der Motordrehmomentunterdrückungssteuerabschnitt (11) dafür ausgelegt ist, das Unterdrücken des Motorausgabedrehmomentes auf das dritte vorbestimmte Drehmoment (T3) fortzusetzen, bis die Fahrzeuggeschwindigkeit (V) kleiner als die erste vorbestimmte Geschwindigkeit (V1) wird.

9. Steuervorrichtung für das Automatikgetriebe nach wenigstens einem der vorhergehenden Ansprüche 2 bis 8, wobei:
der Versagensbestimmungsabschnitt (11) bestimmt, dass der Verhindererschalter (2) in dem Versagenszustand ist, wenn ein Mehrfachsignal von dem Verhindererschalter (2) erzeugt wird, wenn keine Signalausgabe von dem Verhindererschalter (2) vorhanden ist oder wenn ein undefiniertes Signal von dem Verhindererschalter (2) erzeugt wird.

10. Verfahren zum Wahrnehmen von Versagenssicherungsfunktionen für ein computergesteuertes Automatikgetriebe (9), das mit einer Ausgabewelle eines Motors (4) eines Fahrzeuges verbunden ist, einsetzend einen Betätigungshebel (1), der einen Gangschaltbereich des Automatikgetriebes (9) durch Auswählen eines aus einer Mehrzahl von vorbestimmten Gangschaltbereichen einstellt, einen Verhindererschalter (2), der ein Bereichssignal entsprechend dem durch den Betätigungshebel (1) ausgewählten Gangschaltbereich als Verhindererschaltersignal erzeugt, und einen Fahrzeuggeschwindigkeitssensor (3), der eine Geschwindigkeit (V) des Fahrzeuges erfasst, wobei das Verfahren umfasst:
auf Grundlage des Verhindererschaltersignals erfolgendes Bestimmen, ob der Verhindererschalter (2) in einem Versagenszustand ist;
**dadurch gekennzeichnet, dass**
das Verfahren des Weiteren umfasst:
Einstellen einer Drehmomentunterdrückungsgröße eines Ausgabedrehmomentes des Motors (4) in Abhängigkeit von der Fahrzeuggeschwindigkeit (V) beim Bestimmen des Versagenszustandes des Verhindererschalters (2); und
Unterdrücken des Motorausgabedrehmomentes entsprechend der Drehmomentunterdrückungsgröße, die in dem Versagenszustand des Verhindererschalters (2) eingestellt worden ist.

11. Verfahren nach Anspruch 10, des Weiteren umfassend:
Bestimmen, dass der Verhindererschalter (2) in dem Versagenszustand ist, wenn keine Ausgabe von irgendeinem der vordefinierten Verhindererschaltersignale entsprechend der Mehrzahl von vorbestimmten Gangschaltbereichen vorhanden ist.

12. Verfahren nach Anspruch 10, des Weiteren umfassend:
Bestimmen, dass der Verhindererschalter (2) in dem Versagenszustand ist, wenn ein Mehrfachsignal von dem Verhindererschalter (2) erzeugt wird, wenn keine Signalausgabe von dem Verhindererschalter (2) vorhanden ist oder wenn ein undefiniertes Signal von dem Verhindererschalter (2) erzeugt wird.

13. Verfahren nach wenigstens einem der Ansprüche 10 bis 12, des Weiteren umfassend:
Unterdrücken des Motorausgabedrehmomentes auf ein erstes vorbestimmtes Drehmoment (T1), wenn die Fahrzeuggeschwindigkeit (V) kleiner als eine erste vorbestimmte Geschwindigkeit (V1) in dem Versagenszustand des Verhindererschalters (2) ist.

14. Verfahren nach Anspruch 13, des Weiteren umfassend:
Unterdrücken des Motorausgabedrehmomentes auf ein zweites vorbestimmtes Drehmoment (T2), das größer als das erste vorbestimmte Drehmoment (T1) ist, wenn die Fahrzeuggeschwindigkeit (V) größer oder gleich der ersten vorbestimmten Geschwindigkeit (V1) in dem Versagenszustand des Verhindererschalters (2) ist.

15. Verfahren nach Anspruch 14, des Weiteren umfassend:
Begrenzen einer Zunahmerate ((T2 - T1) / td) des Motorausgabedrehmomentes in Bezug auf die Zeit auf weniger als eine vorbestimmte Zeitänderungsrate beim Gangschalten von dem ersten vorbestimmten Drehmoment (T1) auf das zweite vorbestimmte Drehmoment (T2).

16. Verfahren nach wenigstens einem der Ansprüche 10 bis 15, des Weiteren umfassend:
Erfassen eines Motordurchdrehzustandes; und
Unterdrücken des Motorausgabedrehmomentes auf ein drittes vorbestimmtes Drehmoment (T3) unabhängig von der Fahrzeuggeschwindigkeit (V) in dem Versagenszustand des Verhindererschalters (2) und zusätzlich in dem Motordurchdrehzustand.

17. Verfahren nach Anspruch 16, des Weiteren umfassend:
sobald der Motordurchdrehzustand des Motors (4) erfasst worden ist, erfolgendes Fortsetzen des Unterdrückens des Motorausgabedrehmomentes auf das dritte vorbestimmte Drehmoment (T3), bis die Fahrzeuggeschwindigkeit (V) kleiner als die erste vorbestimmte Geschwindigkeit (V1) ist.

18. Verfahren nach einem der Ansprüche 16 bis 17, wobei:
das dritte vorbestimmte Drehmoment (T3) gleich dem ersten vorbestimmten Drehmoment (T1) ist.

## Revendications

1. Dispositif de commande pour une transmission automatique (9) relié à un arbre de sortie d'un moteur (4) d'un véhicule, comprenant :
un levier d'actionnement (1) qui fixe une plage de changement de vitesse de la transmission automatique (9) en sélectionnant l'une d'une pluralité de plages de changement de vitesse prédéterminées ;
un commutateur d'inhibition (2) qui génère un signal de plage correspondant à la plage de changement de vitesse sélectionnée par le levier d'actionnement (1) en tant que signal de commutateur d'inhibition ;
un capteur de vitesse de véhicule (3) qui détecte une vitesse (V) du véhicule ; et
une unité de commande de moteur (10) configurée pour être connectée électriquement au commutateur d'inhibition (2) et au capteur de vitesse de véhicule (3) pour répondre à une défaillance dans le commutateur d'inhibition (2) ;
**caractérisé en ce que**
l'unité de commande de moteur (10) diminue un couple de sortie du moteur (4) en fonction de la vitesse de véhicule (V), dans une condition spécifiée où aucun de signaux de commutateur d'inhibition prédéfinis correspondant à la pluralité de plages de changement de vitesse prédéterminées n'est appliqué du commutateur d'inhibition (2) à l'unité de commande de moteur (10).

2. Dispositif de commande pour la transmission automatique (9) selon la revendication 1, dans lequel l'unité de commande de moteur (10) comprend :
une section de détermination de défaillance (11) pour déterminer, sur la base du signal de commutateur d'inhibition, si le commutateur d'inhibition (2) est dans un état de défaillance ; et
une section de commande de diminution de couple de moteur (12) pour diminuer un couple de sortie du moteur (4) en fonction de la vitesse de véhicule (V), lorsque la section de détermination de défaillance (11) détermine que le commutateur d'inhibition (2) est dans l'état de défaillance.

3. Dispositif de commande pour la transmission automatique selon la revendication 2, dans lequel la section de détermination de défaillance (11) détermine que le commutateur d'inhibition (2) est dans l'état de défaillance, lorsque aucun desdits signaux de commutateur d'inhibition prédéfinis correspondant à la pluralité de plages de changement de vitesse prédéterminées n'est appliqué du commutateur d'inhibition (2) à l'unité de commande de moteur (10).

4. Dispositif de commande pour la transmission automatique selon la revendication 2, dans lequel la section de commande de diminution de couple de moteur (12) est configurée pour diminuer le couple de sortie dé moteur de sorte que le couple de sortie de moteur soit fixé à un premier couple prédéterminé (T1), lorsque la section de détermination de défaillance (11) détermine que le commutateur d'inhibition (2) est dans l'état de défaillance, et qu'en plus la vitesse de véhicule (V) est inférieure à une première vitesse prédéterminée (V1).

5. Dispositif de commande pour la transmission automatique selon la revendication 4, dans lequel la section de commande de diminution de couple de moteur (12) est configurée pour diminuer le couple de sortie de moteur de sorte que le couple de sortie de moteur soit fixé à un deuxième couple prédéterminé (T2) qui est supérieur au premier couple prédéterminé (T1), lorsque la section de détermination de défaillance (11) détermine que le commutateur d'inhibition (2) est dans l'état de défaillance, et qu'en plus la vitesse de véhicule (V) est supérieure ou égale à la première vitesse prédéterminée (V1).

6. Dispositif de commande pour la transmission automatique selon la revendication 5, dans lequel la section de commande de diminution de couple de moteur (12) comprend une section de limitation de taux de changement de couple (14) pour limiter un taux de changement ((T2 - T1)/td) du couple de sortie de moteur par rapport au temps à une valeur inférieure à un taux de changement par rapport au temps prédéterminé.

7. Dispositif de commande pour la transmission automatique selon au moins l'une des revendications 2 à 6 précédentes, dans lequel :
l'unité de commande de moteur (10) comprend en outre une section de détection d'emballement de moteur (13) qui détecte un état d'emballement de moteur ; et
la section de commande de diminution de couple de moteur (12) est configurée pour diminuer le couple de sortie de moteur indépendamment de la vitesse de véhicule (V) de sorte que le couple de sortie de moteur soit fixé à un troisième couple prédéterminé (T3), lorsque la section de détermination de défaillance (11) détermine que le commutateur d'inhibition (2) est dans l'état de défaillance, et que
de plus la section de détection d'emballement de moteur (13) détecte l'état d'emballement de moteur du moteur (4).

8. Dispositif de commande pour la transmission automatique selon la revendication 7, dans lequel, dès que la section de détection d'emballement de moteur (13) détecte l'état d'emballement de moteur du moteur (4), la section de commande de diminution de couple de moteur (12) est configurée pour continuer de diminuer le couple de sortie de moteur au troisième couple prédéterminé (T3) jusqu'à ce que la vitesse de véhicule (V) devienne inférieure à la première vitesse prédéterminée (V1).

9. Dispositif de commande pour la transmission automatique selon au moins l'une des revendications 2 à 8 précédentes, dans lequel :
la section de détermination de défaillance (11) détermine que le commutateur d'inhibition (2) est dans l'état de défaillance, lorsqu'un signal multiple est généré par le commutateur d'inhibition (2), lorsque aucun signal n'est délivré par le commutateur d'inhibition (2), ou lorsqu'un signal indéfini est généré par le commutateur d'inhibition (2).

10. Procédé pour exécuter des fonctions de sécurité intégrée pour une transmission automatique commandée par ordinateur (9) reliée à un arbre de sortie d'un moteur (4) d'un véhicule utilisant un levier d'actionnement (1) fixant une plage de changement de vitesse de la transmission automatique (9) en sélectionnant l'une d'une pluralité de plages de changement de vitesse prédéterminées, un commutateur d'inhibition (2) générant un signal de plage correspondant à la plage de changement de vitesse sélectionnée par le levier d'actionnement (1) en tant que signal de commutateur d'inhibition, et un capteur de vitesse de véhicule (3) détectant une vitesse (V) du véhicule, le procédé comprenant l'étape consistant à :
déterminer, sur la base du signal de commutateur d'inhibition,
si le commutateur d'inhibition (2) est dans un état de défaillance ;
**caractérisé en ce que,**
ledit procédé comprend en outre les étapes consistant à :
fixer une quantité de diminution de couple d'un couple de sortie du moteur (4) en fonction de la vitesse de véhicule (V), lors de la détermination de l'état de défaillance du commutateur d'inhibition (2) ; et
diminuer le couple de sortie de moteur en fonction de la quantité de diminution de couple fixée dans l'état de défaillance du commutateur d'inhibition (2).

11. Procédé selon la revendication 10, comprenant en outre l'étape consistant à :
déterminer que le commutateur d'inhibition (2) est dans l'état de défaillance lorsque aucun des signaux de commutateur d'inhibition prédéfinis correspondant à la pluralité de plages de changement de vitesse prédéterminées n'est délivré.

12. Procédé selon la revendication 10, comprenant en outre l'étape consistant à :
déterminer que le commutateur d'inhibition (2) est dans l'état de défaillance lorsqu'un signal multiple est généré par le commutateur d'inhibition (2), lorsque aucun signal n'est délivré par le commutateur d'inhibition (2), ou lorsqu'un signal indéfini est généré par le commutateur d'inhibition (2).

13. Procédé selon au moins l'une des revendications 10 à 12, comprenant en outre l'étape consistant à :
diminuer le couple de sortie de moteur à un premier couple prédéterminé (T1), lorsque la vitesse de véhicule (V) est inférieure à une première vitesse prédéterminée (V1) dans l'état de défaillance du commutateur d'inhibition (2).

14. Procédé selon la revendication 13, comprenant en outre l'étape consistant à :
diminuer le couple de sortie de moteur à un deuxième couple prédéterminé (T2) qui est supérieur au premier couple prédéterminé (T1), lorsque la vitesse de véhicule (V) est supérieure ou égale à la première vitesse prédéterminée (V1) dans l'état de défaillance du commutateur d'inhibition (2).

15. Procédé selon la revendication 14, comprenant en outre l'étape consistant à :
limiter un taux d'augmentation ((T2 - T1)/td) du couple de sortie de moteur par rapport au temps à une valeur inférieure à un taux de changement prédéterminé dans le temps lors du passage du premier couple prédéterminé (T1) au deuxième couple prédéterminé (T2).

16. Procédé selon au moins l'une des revendications 10 à 15, comprenant en outre les étapes consistant à :
détecter un état d'emballement de moteur ; et
diminuer le couple de sortie de moteur à un troisième couple prédéterminé (T3) indépendamment de la vitesse de véhicule (V), dans l'état de défaillance du commutateur d'inhibition (2) et en plus dans l'état d'emballement de moteur.

17. Procédé selon la revendication 16, comprenant en outre l'étape consistant à :
dès que l'état d'emballement de moteur du moteur (4) a été détecté,
continuer de diminuer le couple de sortie de moteur au troisième couple prédéterminé (T3) jusqu'à ce que la vitesse de véhicule (V) devienne inférieure à la première vitesse prédéterminée (V1).

18. Procédé selon l'une ou l'autre des revendications 16 et 17, dans lequel :
le troisième couple prédéterminé (T3) est égal au premier couple prédéterminé (T1).
